# EUROPÄISCHE PATENTANMELDUNG

(11) **EP 0 717 081 A1**
(43) Veröffentlichungstag der Anmeldung: **19.06.1996**
(21) Anmeldenummer: 95119051.1
(22) Anmeldetag: 04.12.1995
(51) Int. Cl.: C09B 44/10, C09D 11/00

(54) **Kationische 1,3,4-Thiadiazolfarbstoffe**

(30) Priorität: 16.12.1994 DE 4444863
(71) Anmelder: BAYER AG, 51368 Leverkusen (DE)
(72) Erfinder: Berneth, Horst, Dr., D-51373 Leverkusen (DE); Giera, Henry, Dr., D-51429 Bergisch Gladbach (DE)

(57) **Zusammenfassung**

Es wurden kationische 1,3,4-Thiadiazolfarbstoffe der Formel (I) 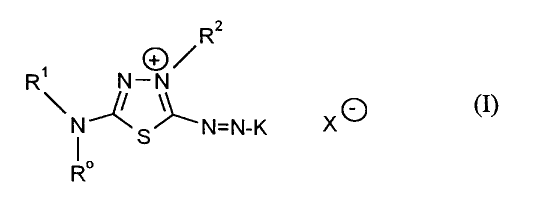
gefunden, worin
- R²: C₁-C₁₂-Alkyl, C₂-C₁₂-Alkenyl, C₄-C₈-Cycloalkyl oder C₆-C₁₀-Aryl-C₁-C₅-alkyl bedeutet und

a)
   - R¹: für Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl steht, wenn
   - R^{o}: einen Rest der Formel 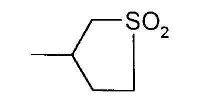 bedeutet,
   oder
b)
   - R¹: für C₂-C₁₂-Alkenyl, C₄-C₈-Hydroxyalkyl, C₁-C₈-Cyanoalkyl, C₄-C₈-Cycloalkyl, C₆-C₁₀-Aryl oder unsubstituiertes C₃-C₁₂-Alkyl oder durch Halogen oder C₁-C₄-Alkoxy substituiertes C₁-C₁₂-Alkyl steht, wenn
   - R^{o}: einen durch Cyano oder Hydroxy substituierten C₁-C₁₂-Alkylrest bedeutet,
   oder
   - R¹: für Wasserstoff, CH₃ oder C₂H₅ steht, wenn R^{o} CH₂CN oder CH₂CH₂CH₂CN bedeutet.
   - X⁻: ein Anion bedeuten
   und
   - K: die in der Beschreibung angegebene Bedeutung besitzt.

## Beschreibung

In DE-A-28 11 258, DE-A-42 22 257, DE-A-41 00 810 sowie FR 1 199 411 sind bereits 1,3,4-Thiadiazolfarbstoffe beschrieben.

Die vorliegende Erfindung betrifft kationische 1,3,4-Thiadiazolfarbstoffe der Formel (I) 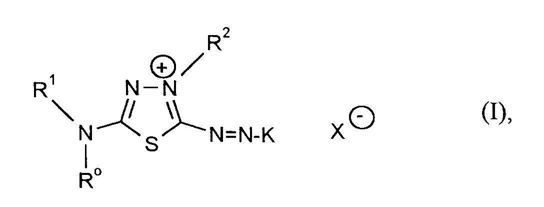
worin
- R²: C₁-C₁₂-Alkyl, C₂-C₁₂-Alkenyl, C₄-C₈-Cycloalkyl oder C₆-C₁₀-Aryl-C₁-C₅-alkyl bedeutet und

a)
   - R¹: für Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl steht, wenn
   - R^{o}: einen Rest der Formel 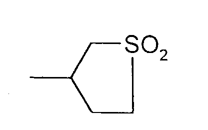 bedeutet,
   oder
b)
   - R¹: für C₂-C₁₂-Alkenyl, C₄-C₈-Hydroxyalkyl, C₁-C₈-Cyanoalkyl, C₄-C₈-Cycloalkyl, C₆-C₁₀-Aryl, unsubstituiertes C₃-C₁₂-Alkyl oder durch Halogen, insbesondere Cl, Br und F, C₁-C₄-Alkoxy, C₁-C₄-Alkoxycarbonyl oder Phenyl substituiertes C₁-C₁₂-Alkyl steht, wenn
   - R^{o}: einen durch Cyano oder Hydroxy substituierten C₁-C₁₂-Alkylrest bedeutet,
   oder
   - R¹: für H, CH₃ oder C₂H₅ steht, wenn R^{o} CH₂CN oder CH₂CH₂CH₂CN bedeutet,

   - K: den Rest einer Kupplungskomponente der Formel (II), (III) oder (IV) 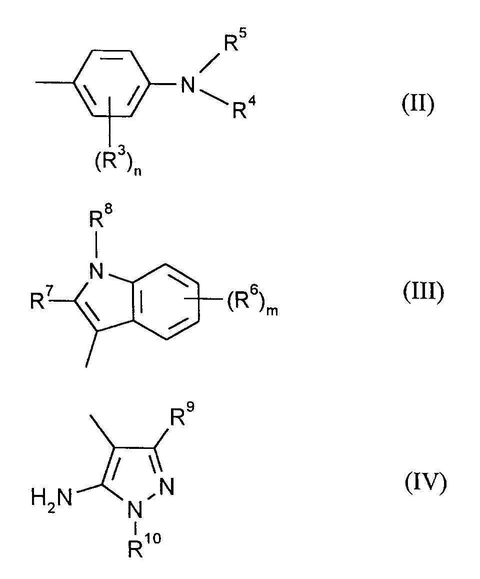 bedeutet, worin
   - R³: Wasserstoff, Halogen, Cyano, Nitro, Hydroxy, C₁-C₁₂-Alkyl, C₁-C₁₂-Alkoxy, C₁-C₁₂-Alkoxycarbonyl, C₁-C₁₂-Acylamino, C₁-C₁₂-Acyloxy, C₁-C₁₂-Alkoxycarbonylamino oder C₁-C₁₂-Alkoxycarbonyloxy bedeutet,
   - R⁴ und R⁵: unabhängig voneinander jeweils Wasserstoff C₁-C₁₂-Alkyl, C₂-C₁₂-Alkenyl, C₄-C₈-Cycloalkyl, C₆-C₁₀-Aryl-C₁-C₅-alkyl, oder einen gegebenenfalls über eine Methylen-oder Ethylengruppe gebundenen Heterocyclus mit bis zu 2 Ringen und bis zu 3 Heteroatomen aus der Gruppe O, N und S oder
   - R⁴ und R⁵: gemeinsam mit dem Stickstoffatom, an das sie gebunden sind einen Heterocyclus mit bis zu 2 Ringen und bis zu 4 Heteroatomen aus der Gruppe O, N und S bilden, oder
   - R³ und R⁴: und/oder R³ und R⁵ gemeinsam eine 2- oder 3-C-Atome enthaltende Brücke bedeuten können, die gegebenenfalls ein Sauerstoff-, Stickstoff- oder Schwefelatom enthalten und gegebenenfalls mit 1 bis 3 Methyl- oder Ethylgruppen substituiert sind,
   - R⁶: Wasserstoff, C₁-C₁₂-Alkyl, C₁-C₁₂-Alkoxy, Cyan, Halogen oder Nitro,
   - R⁷, R⁸, R⁹ und R¹⁰: unabhängig voneinander Wasserstoff, C₁-C₁₂-Alkyl, C₂-C₁₂-Alkenyl, C₄-C₈-Cycloalkyl, C₆-C₁₀-Aryl oder C₆-C₁₀-Aryl-C₁-C₅-Alkyl,
   - R⁹: zusätzlich Cyano oder C₁-C₁₂-Alkoxycarbonyl,
   - n und m: unabhängig 1 oder 2 bedeuten und
   - X⁻: ein Anion bedeutet,
   wobei alle vorhandenen Alkyl- und Aryl-Reste, sofern nichts anderes gesagt wurde, gegebenenfalls mit nichtionogenen Substituenten und/oder Carboxylgruppen substituiert sein können,
   ein Verfahren zu deren Herstellung und deren Verwendung.

Nichtionogene Substituenten sind beispielsweise die in der Farbstoffchemie üblichen nicht dissoziierenden Substituenten wie Cyano, Hydroxy, Fluor, Chlor, Brom, Nitro, C₁-C₁₂-Alkyl, C₁-C₁₂-Alkenyl, C₁-C₁₂-Alkinyl, C₆-C₁₀-Aryl, C₁-C₁₂-Acyl, Amino, Mono- und Di-C₁-C₁₂-alkylamino, C₁-C₁₂-Acylamino, C₆-C₁₀-Arylamino, C₁-C₁₂-Alkoxy, C₆-C₁₀-Aryloxy, und C₁-C₆-Acyloxy.

Acylreste sind beispielsweise Formyl, C₁-C₁₂-Alkylcarbonyl, C₁-C₁₂-Alkenylcarbonyl, C₆-C₁₀-Arylcarbonyl, C₁-C₁₂-Alkoxycarbonyl, C₆-C₁₀-Aryloxycarbonyl, Aminocarbonyl, Mono- und Di-C₁-C₁₂-alkylaminocarbonyl, Mono- und Di-C₆-C₁₀-Arylaminocarbonyl, C₁-C₁₂-Alkylsulfonyl, C₆-C₁₀-Arylsulfonyl, Aminosulfonyl, Mono- und Di-C₁-C₁₂-alkylaminosulfonyl und Mono- und Di-C₆-C₁₀-Arylaminosulfonyl.

Alkylreste, auch abgewandelte, wie z.B. Alkoxy- und Aralkylreste, sind vorzugsweise solche mit 1 bis 8, insbesondere 1 bis 4 C-Atomen, sofern nichts anderes angegeben ist. Sie können auch verzweigt sein. Unter Cycloalkylresten werden insbesondere solche mit 4 bis 7, vorzugsweise 5 oder 6 C-Atomen verstanden.

Alkenylreste sind vorzugsweise solche mit 2 bis 6, vorzugsweise 2 oder 3 C-Atomen.

Arylreste, auch solche in Aralkylresten, sind vorzugsweise Phenylreste, die gegebenenfalls durch 1 bis 3 der oben beschriebenen nichtionogenen Reste und/oder eine Carboxylgruppe substituiert sein können. Zwei nichtionogene Reste in benachbarten Positionen können auch gemeinsam einen Ring bilden.

Als Anionen sind farblose, organische und anorganische Anionen bevorzugt, beispielsweise Fluorid, Chlorid, Bromid, Iodid, Perchlorat, Tetrafluoroborat, Hydroxid, Hydrogensulfat, Sulfat, Dihydrogenphosphat, Hydrogenphosphat, Phosphat, Hydrogencarbonat, Carbonat, Methylsulfat, Ethylsulfat, Cyanat, Thiocyanat, Tri- und Tetrachlorozinkat, Tetrachloroferrat, Hexafluorsilikat und Anionen gesättigter oder ungesättigter aliphatischer, cycloaliphatischer, aromatischer oder heterocyclischer Carbon- und Sulfonsäuren wie Formiat, Acetat, Hydroxyacetat, Cyanacetat, Propionat, Hydroxypropionat, Oxalat, Citrat, Lactat, Tartrat, das Anion der Cyclohexancarbonsäure, Phenylacetat, Benzoat, das Anion der Nikotinsäure, Methansulfonat, Ethansulfonat, Benzolsulfonat, Chlorbenzolsulfonat, Toluolsulfonat. Wenn es sich um mehrwertige Anionen handelt, z.B. um Sulfat oder Oxalat, dann steht in Formel (I) X⁻ für ein Äquivalent solch eines mehrwertigen Anions.

Bevorzugt sind kationische Thiadiazolfarbstoffe der Formel (I), die der Formel (Ia) entsprechen 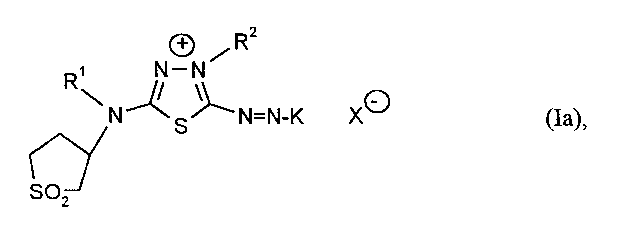
worin
- K: den Rest einer Kupplungskomponente der Formeln (IIa), (IIIa) und (IV) darstellt 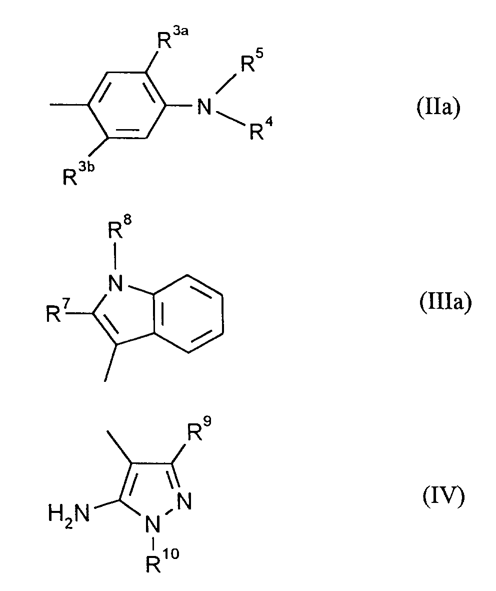 worin
- R¹: Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl,
- R²: C₁-C₁₂-Alkyl, C₂-C₁₂-Alkenyl, C₄-C₈-Cycloalkyl oder C₆-C₁₀-Aryl-C₁-C₅-alkyl,
- R^{3a}: Wasserstoff, Halogen, C₁-C₁₂-Alkyl oder C₁-C₁₂-Alkoxy,
- R^{3b}: Wasserstoff, Halogen, C₁-C₁₂-Alkyl, C₁-C₁₂-Alkoxy, Cyano, Hydroxy, C₁-C₁₂-Acylamino, C₁-C₁₂-Acyloxy, C₁-C₁₂-Alkoxycarbonyl, C₁-C₁₂-Alkoxycarbonylamino oder C₁-C₁₂-Alkoxycarbonyloxy bedeutet,
- R⁴ und R⁵: unabhängig voneinander Wasserstoff C₁-C₁₂-Alkyl, C₂-C₁₂-Alkenyl, C₄-C₈-Cycloalkyl oder C₆-C₁₀-Aryl-C₁-C₅-alkyl bedeuten oder
- NR⁴R⁵: Pyrrolidino, Piperidino, Morphiolino oder Piperazino bedeutet, oder
- R^{3a} mit R⁴: eine -(CH₂)₂-, -(CH₂)₃- oder -O-(CH₂)₂-Brücke bilden, die unsubstituiert oder durch bis zu 3 Alkylreste substituiert ist,
- R⁷, R⁸, R⁹ und R¹⁰: unabhängig voneinander Wasserstoff C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl bedeuten und
- R⁹: zusätzlich Cyano oder C₁-C₁₂-Alkoxycarbonyl bedeutet und
- X⁻: ein Anion bedeutet.

Besonders bevorzugte Farbstoffe der Formel (Ia) sind solche, worin
- R¹: Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist, oder C₅-C₇-Cycloalkyl oder unsubstituiertes oder durch bis zu drei Reste aus der Reihe Halogen, C₁-C₄-Alkyl, C₁-C₄-Alkoxy, Cyano oder Nitro substituiertes Phenyl bedeutet,
- R²: unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist, oder C₅-C₇-Cycloalkyl bedeutet,
- R^{3a}: Wasserstoff, Halogen, C₁-C₄-Alkyl oder C₁-C₄-Alkoxy bedeutet,
- R^{3b}: Wasserstoff, Halogen, C₁-C₄-Alkyl, C₁-C₄-Alkoxy, Cyano, Hydroxy, unsubstituiertes oder durch Halogen substituiertes C₁-C₄-Alkanoylamino, -Alkanoyloxy oder -Alkylsulfonylamino oder C₁-C₄-Alkoxy-carbonyl-, -carbonylamino- oder -carbonyloxy-Reste bedeutet,
- R⁴ und R⁵: unabhängig voneinander unsubstituiertes oder durch Halogen, C₁-C₄-Alkoxy, Hydroxy, Cyano, C₁-C₄-Alkoxycarbonyl oder Phenyl substituiertes, C₁-C₈-Alkyl, C₃-C₆-Alkenyl, das jeweils unverzweigt oder verzweigt ist oder C₅-C₇-Cycloalkyl bedeuten, und
- R⁵: zusätzlich Wasserstoff bedeuten kann oder
- R^{3a} mit R⁴: eine Brücke der Formeln -(CH₂)₂-, -(CH₂)₃-, -CH₂-CH(CH₃)-, -CH(CH₃)-CH₂-C(CH₃)₂- oder -O-(CH₂)₂- bedeuten oder
- NR⁴R⁵: Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
- R⁷ und R⁹: unabhängig voneinander Wasserstoff, unsubstituiertes oder durch Halogen, Methoxy oder Cyano substituiertes C₁-C₈-Alkyl, das unverzweigt oder verzweigt ist oder unsubstituiertes oder durch Halogen, Methyl, Methoxy oder Cyano substituiertes Phenyl bedeuten und
- R⁹: zusätzlich Cyano oder C₁-C₄-Alkoxycarbonyl bedeutet,
- R⁸ und R¹⁰: unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist oder C₅-C₇-Cycloalkyl, oder unsubstituiertes oder durch bis zu drei Reste aus der Reihe Halogen, C₁-C₄-Alkyl, C₁-C₄-Alkoxy, Cyano oder Nitro substituiertes Phenyl bedeuten und
- X⁻: ein Anion bedeutet.

Ganz besonders bevorzugte Farbstoffe der Formel (Ia) sind solche, worin
- R¹: Wasserstoff, Methyl, Ethyl, Propyl, Butyl, Hydroxyethyl, Hydroxypropyl, Cyanethyl, Chlorethyl, Methoxycarbonylethyl, Benzyl, Phenethyl, Allyl, Cyclopentyl, Cyclohexyl, Phenyl, Tolyl, Anisyl, Chlorphenyl, Dimethoxyphenyl, Trifluormethylphenyl oder Cyanophenyl bedeutet,
- R²: Methyl, Ethyl, Propyl, Butyl, Methoxyethyl, Cyanethyl, Hydroxyethyl, Hydroxypropyl oder Benzyl bedeutet,
- R^{3a}: Wasserstoff, Fluor, Chlor, Methyl, Ethyl, Methoxy oder Ethoxy bedeutet,
- R^{3b}: Wasserstoff, Fluor, Chlor, Methyl, Ethyl, Methoxy, Ethoxy, Cyano, Hydroxy, Acetylamino, Propionylamino, Methansulfonylamino, Trifluormethansulfonylamino, Acetoxy, Methoxycarbonyl, Ethoxycarbonyl, Methoxycarbonylamino oder Methoxycarbonyloxy bedeutet,
- R⁴ und R⁵: unabhängig voneinander Methyl, Ethyl, Propyl, Butyl, Chlorethyl, Cyanethyl, Hydroxyethyl, Benzyl, Phenethyl, Allyl, Cyclopentyl oder Cyclohexyl bedeuten und
- R⁵: zusätzlich Wasserstoff bedeuten kann oder
- R^{3a} mit R⁴: eine Brücke der Formeln -CH₂-CH(CH₃)- oder -CH(CH₃)-CH₂-C(CH₃)₂-bedeutet oder
- NR⁴R⁵: Pyrrolidino, Piperidino oder Morpholino bedeutet,
- R⁷ und R⁹: unabhängig voneinander Methyl, Ethyl, Phenyl, Tolyl oder Chlorphenyl bedeuten und
- R⁹: zusätzlich Cyano bedeutet,
- R⁸ und R¹⁰: unabhängig voneinander Wasserstoff, Methyl, Ethyl, Propyl, Butyl, Cyanethyl, Benzyl oder Phenyl bedeuten und
- X⁻: ein Anion bedeutet.

Von den ganz besonders bevorzugten Farbstoffen der Formel (Ia) sind insbesondere solche zu nennen, worin
- R¹: Wasserstoff, Methyl, Ethyl, Cyanethyl oder Phenyl bedeutet,
- R²: Methyl, Ethyl, Cyanethyl oder Benzyl bedeutet,
- R^{3a}: Wasserstoff, Fluor, Chlor, Methyl oder Methoxy bedeutet,
- R^{3b}: Wasserstoff, Fluor, Chlor, Methyl, Methoxy, Cyano, Acetylamino, Propionylamino, Methoxycarbonyl oder Ethoxycarbonyl bedeutet,
- R⁴ und R⁵: unabhängig voneinander Methyl, Ethyl, Cyanethyl oder Benzyl bedeuten und
- R⁵: zusätzlich Wasserstoff bedeutet oder
- NR⁴R⁵: Pyrrolidino bedeutet,
- R⁷ und R⁹: unabhängig voneinander Methyl oder Phenyl bedeuten,
- R⁸ und R¹⁰: unabhängig voneinander Wasserstoff, Methyl oder Cyanethyl bedeuten und
- X⁻: ein Anion bedeutet.

Weitere ganz besonders bevorzugte Farbstoffe der Formel (Ia) sind solche, worin
- R¹: Wasserstoff,
- R²: Methyl oder Benzyl,
- R^{3a}: Wasserstoff, Methyl oder Methoxy,
- R^{3b}: Wasserstoff, Methyl oder Methoxy,
- R⁴: Wasserstoff, Methyl, Ethyl oder Benzyl,
- R⁵: Methyl, Ethyl oder Benzyl oder
- NR⁴R⁵: Pyrrolidino bedeutet,
- R⁷ und R⁹: Phenyl,
- R⁸ und R¹⁰: unabhängig voneinander Wasserstoff oder Methyl bedeuten und
- X⁻: ein Anion bedeutet.

Weiterhin bevorzugt sind kationische Thiadiazolfarbstoffe der Formel (I), die der Formel (Ib) entsprechen 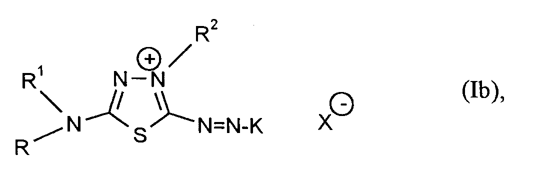
worin
K den Rest einer Kupplungskomponente der Formeln (IIa), (IIIa) und (IV) darstellt 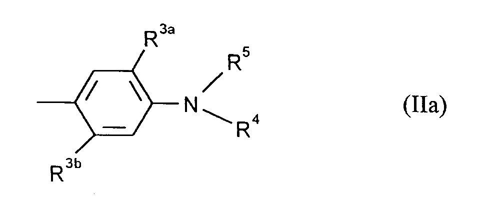 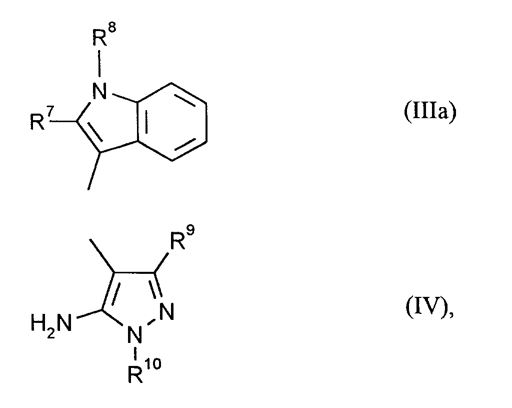
worin
- R: einen durch Cyano oder Hydroxy substituierten C₁-C₁₂-Alkylrest bedeutet,
- R¹: C₂-C₁₂-Alkenyl, C₄-C₈-Hydroxyalkyl, C₁-C₈-Cyanoalkyl, C₄-C₅-Cycloalkyl, C₆-C₁₀-Aryl, unsubstituiertes C₃-C₁₂-Alkyl oder durch Halogen, insbesondere Cl, Br und F, C₁-C₄-Alkoxy, C₁-C₄-Alkoxycarbonyl oder Phenyl substituiertes C₁-C₁₂-Alkyl bedeutet,
oder
- R¹: für Wasserstoff, CH₃ oder C₂H₅ steht, wenn R CH₂CN oder CH₂CH₂CH₂CN bedeutet,
- R²: C₁-C₁₂-Alkyl, C₂-C₁₂-Alkenyl, C₄-C₈-Cycloalkyl oder C₆-C₁₀-Aryl-C₁-C₅-alkyl bedeutet,
- R^{3a}: Wasserstoff, Halogen, C₁-C₁₂-Alkyl oder C₁-C₁₂-Alkoxy bedeutet,
- R^{3b}: Wasserstoff, Halogen, C₁-C₁₂-Alkyl, C₁-C₁₂-Alkoxy, Cyano, Hydroxy, Acylamino, Acyloxy, C₁-C₁₂-Alkoxycarbonyl, C₁-C₁₂-Alkoxycarbonylamino oder C₁-C₁₂-Alkoxycarbonyloxy bedeutet,
- R⁴ und R⁵: unabhängig voneinander Wasserstoff, C₁-C₁₂-Alkyl, C₂-C₁₂-Alkenyl, C₄-C₈-Cycloalkyl oder C₆-C₁₀-Aryl-C₁-C₅-alkyl bedeuten oder
- R^{3a} mit R⁴: eine -(CH₂)₂-, -(CH₂)₃- oder -O-(CH₂)₂-Brücke bilden, die unsubstituiert oder durch bis zu 3 Alkylreste substituiert ist, oder
- NR⁴R⁵: Pyrrolidino, Piperidino, Morpholino oder Piperazino bedeutet,
- R⁷, R⁸, R⁹ und R¹⁰: unabhängig voneinander Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl bedeuten und
- R⁹: zusätzlich Cyano oder C₁-C₄-Alkoxycarbonyl bedeutet und
- X⁻: ein Anion bedeutet.

Besonders bevorzugte Farbstoffe der Formel (Ib) sind solche, worin
- R: Cyanmethyl, Cyanethyl, Cyanpropyl, Hydroxyethyl oder 2-Hydroxypropyl bedeutet,
- R¹: unsubstituiertes C₃-C₈-Alkyl oder durch Halogen, C₁-C₄-Alkoxy, Hydroxy, C₁-C₄-Alkoxycarbonyl oder Phenyl substituiertes C₁-C₈-Alkyl, das unverzweigt oder verzweigt ist, Cyanethyl, Cyclopentyl oder Cyclohexyl bedeutet,
oder
- R¹: für Wasserstoff, CH₃ oder C₂H₅ steht, wenn R CH₂CN oder CH₂CH₂CH₂CN bedeutet,
- R²: unsubstituiertes oder durch Halogen, C₁-C₄-Alkoxy, Hydroxy, Cyano, C₁-C₄-Alkoxycarbonyl oder Phenyl substituiertes, C₁-C₈-Alkyl, C₃-C₆-Alkenyl, das jeweils unverzweigt oder verzweigt ist, oder C₅-C₇-Cycloalkyl bedeutet,
- R^{3a}: Wasserstoff, Halogen, C₁-C₄-Alkyl oder C₁-C₄-Alkoxy bedeutet,
- R^{3b}: Wasserstoff, Halogen, C₁-C₄-Alkyl, C₁-C₄-Alkoxy, Cyano, Hydroxy, unsubstituierte oder durch Halogen substituierte C₁-C₄-Alkanoylamino-, -Alkanoyloxy- oder -Alkylsulfonylamino-Reste oder C₁-C₄-Alkoxycarbonyl-, -Carbonylamino- oder -Carbonyloxy-Reste bedeutet,
- R⁴ und R⁵: unabhängig voneinander unsubstituiertes oder durch Halogen, C₁-C₄-Alkoxy, Hydroxy, Cyano, C₁-C₄-Alkoxycarbonyl oder Phenyl substituiertes, C₁-C₈-Alkyl, C₃-C₆-Alkenyl, das jeweils unverzweigt oder verzweigt ist oder C₅-C₇-Cycloalkyl, bedeuten und
- R⁵: zusätzlich Wasserstoff bedeutet oder
- R^{3a} mit R⁴: eine Brücke der Formeln -(CH₂)₂-, -(CH₂)₃-, -CH₂-CH(CH₃)-, -CH(CH₃)-CH₂-C(CH₃)₂- oder -O-(CH₂)₂- bildet
- NR⁴R⁵: Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
- R⁷ und R⁹: unabhängig voneinander Wasserstoff, unsubstituiertes oder durch Halogen, Methoxy oder Cyano substituiertes, unverzweigtes oder verzweigtes C₁-C₈-Alkyl oder unsubstituiertes oder durch Halogen, Methyl, Methoxy oder Cyano substituiertes Phenyl bedeuten und
- R⁹: zusätzlich Cyano oder C₁-C₄-Alkoxycarbonyl bedeutet,
- R⁸ und R¹⁰: unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl oder C₅-C₇-Cycloalkyl bedeutet, oder unsubstituiertes oder durch bis zu drei Resten aus der Reihe Halogen, C₁-C₄-Alkoxy, Cyano oder Nitro substituiertes Phenyl bedeuten und
- X⁻: ein Anion bedeutet.

Ganz besonders bevorzugte Farbstoffe der Formel (Ib) sind solche, worin
- R: Cyanethyl, Hydroxyethyl oder 2-Hydroxypropyl bedeutet,
- R¹: Propyl, Butyl, Hydroxybutyl, Chlorpropyl, Methoxypropyl, Cyanethyl, Benzyl oder Cyclohexyl bedeutet,
- R²: Methyl, Ethyl, Propyl, Butyl, Methoxyethyl, Cyanethyl, Hydroxyethyl, Hydroxypropyl oder Benzyl bedeutet,
- R^{3a}: Wasserstoff, Fluor, Chlor, Methyl, Ethyl, Methoxy oder Ethoxy bedeutet,
- R^{3b}: Wasserstoff, Fluor, Chlor, Methyl, Ethyl, Methoxy, Ethoxy, Cyano, Hydroxy, Acetylamino, Propionylamino, Methansulfonylamino, Trifluormethansulfonylamino, Acetoxy, Methoxycarbonyl, Ethoxycarbonyl, Methoxycarbonylamino oder Methoxycarbonyloxy bedeutet,
- R⁴ und R⁵: unabhängig voneinander Methyl, Ethyl, Propyl, Butyl, Chlorethyl, Cyanethyl, Hydroxyethyl, Benzyl, Phenethyl, Allyl, Cyclopentyl oder Cyclohexyl bedeuten und
- R⁵: zusätzlich Wasserstoff bedeutet,
- R^{3a} mit R⁴: eine Brücke der Formeln -CH₂-CH(CH₃)- oder -CH(CH₃)-CH₂-C(CH₃)₂-bildet oder
- NR⁴R⁵: Pyrrolidino, Piperidino oder Morpholino bedeutet,
- R⁷ und R⁹: unabhängig voneinander Methyl, Ethyl, Phenyl, Tolyl oder Chlorphenyl bedeuten und
- R⁹: zusätzlich Cyano bedeutet,
- R⁸ und R¹⁰: unabhängig voneinander Wasserstoff, Methyl, Ethyl, Propyl, Butyl, Cyanethyl, Benzyl oder Phenyl bedeuten und
- X⁻: ein Anion bedeutet.

Von den ganz besonders bevorzugten Farbstoffen der Formel (Ib) sind insbesondere solche zu nennen, worin
- R: Cyanethyl bedeutet,
- R¹: Propyl, Butyl oder Cyanethyl bedeutet,
- R²: Methyl, Ethyl, Cyanethyl oder Benzyl bedeutet,
- R^{3a}: Wasserstoff, Fluor, Chlor, Methyl oder Methoxy bedeutet,
- R^{3b}: Wasserstoff, Fluor, Chlor, Methyl, Methoxy, Cyano, Acetylamino, Propionylamino, Methoxycarbonyl oder Ethoxycarbonyl bedeutet,
- R⁴ und R⁵: unabhängig voneinander Methyl, Ethyl, Cyanethyl oder Benzyl bedeuten und
- R⁵: zusätzlich Wasserstoff bedeutet oder
- NR⁴R⁵: Pyrrolidino bedeutet,
- R⁷ und R⁹: unabhängig voneinander Methyl oder Phenyl,
- R⁸ und R¹⁰: Wasserstoff, Methyl oder Cyanethyl bedeuten und
- X⁻: ein Anion bedeutet.

Weitere ganz besonders bevorzugte Farbstoffe der Formel (Ib) sind solche, worin
- R und R¹: Cyanethyl bedeuten,
- R²: Methyl oder Benzyl,
- R^{3a}: Wasserstoff, Methyl oder Methoxy,
- R^{3b}: Wasserstoff, Methyl oder Methoxy,
- R⁴: Wasserstoff, Methyl, Ethyl oder Benzyl,
- R⁵: Methyl, Ethyl oder Benzyl bedeutet oder
- NR⁴R⁵: Pyrrolidino bedeutet,
- R⁷ und R⁹: Phenyl,
- R⁸ und R¹⁰: unabhängig voneinander Wasserstoff oder Methyl bedeuten und
- X⁻: ein Anion bedeutet.

Die vorliegende Erfindung betrifft weiterhin ein Verfahren zur Herstellung von kationischen 1,3,4-Thiadiazolfarbstoffen der Formel (I), das dadurch gekennzeichnet ist, daß man 2-Amino-1,3,4-thiadiazole der Formel (V) 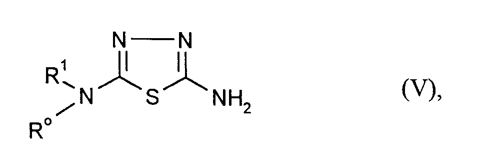
in der R¹ und R^{o} die oben angegebene breiteste Bedeutung haben, diazotiert und auf eine Kupplungskomponente der Formel K-H kuppelt und dann mit Verbindungen der Formel (VI)

(R²)X (VI),

in der
- R² und X: die oben angegebene Bedeutung haben,
quaterniert.

Bei der Kupplungskomponente K handelt es sich vorzugsweise um eine Verbindung der Formeln (VII), (VIII) oder (IX) 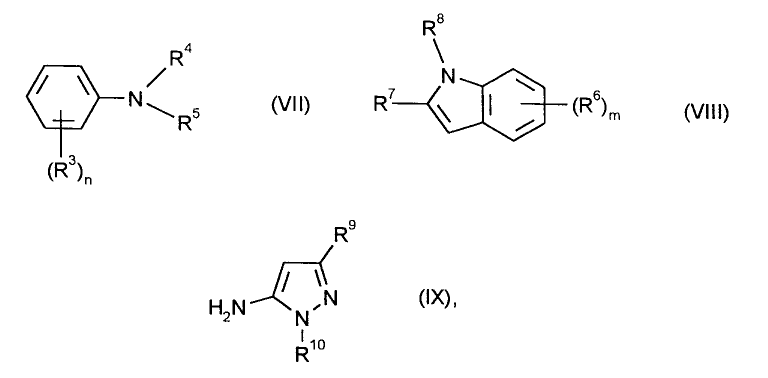
in denen
- R³, R⁴, R⁵, R⁶, R⁷, R⁸, R⁹, R¹⁰, m und n: die oben angegebene Bedeutung haben.

Die Diazotierung und Kupplung kann in an sich bekannter Weise durchgeführt werden, beispielsweise mit Nitrosylschwefelsäure in 80 bis 90 gew.-%iger Phosphorsäure oder in Gemischen solcher Phosphorsäuren mit Essigsäure, Propionsäure und/oder Schwefelsäure. Die erwähnte Kupplung kann ebenfalls auf an sich bekannte Weise durchgeführt werden, beispielsweise in einem sauren Medium, das wäßrig oder wäßrig-organisch sein kann.

Die Diazotierung und Kupplung kann auch nach anderen an sich bekannten Verfahren simultan durchgeführt werden, beispielsweise indem man Verbindungen der Formel (V) und Verbindungen K-H gemeinsam in einem sauren Medium mit beispielsweise Natriumnitrit umsetzt. Als saure Medien sind z.B. wäßrige Mineralsäuren oder organische Säuren oder Mischungen davon geeignet, wobei als Mineralsäuren z.B. Salzsäure, Schwefelsäure und Phosphorsäure und als organische Säuren z.B. Ameisensäure, Essigsäure und Propionsäure in Frage kommen. Auch unter Druck verflüssigtes Kohlendioxid kann als saures Medium dienen. Als quaternierende Mittel kommen z.B. in Betracht Alkylhalogenide, Halogenacetamide, β-Halogenpropionitrile, Halogenhydrine, Alkylenoxide, Alkylester der Schwefelsäure, Alkylester organischer Sulfonsäuren, Nitrile, Amide und Ester von α,β-ungesättigten Carbonsäuren, Alkoxyalkylhalogenide und Vinylpyridine. Als Beispiele seien genannt: Methylchlorid, Methylbromid, Methyliodid, Benzylchlorid, Benzylbromid, Chloracetamid, β-Chlorpropionitril, Ethylenchlorhydrin, Dimethylsulfat, Diethylsulfat, Benzolsulfonsäuremethylester, Benzolsulfonsäureethylester, Toluolsulfonsäurepropylester, Allylchlorid, Allylbromid, Ethylenoxid, Propylenoxid, Acrylnitril, Acrylsäure, Acrylamid, Acrylsäuremethylester, 2-und 4-Vinylpyridin, Sulfolen, Epichlorhydrin, Styroloxid, Methylphosphonsäuredimethylester und Allylphosphorsäureester.

Die erwähnte Quaternierung kann z.B. in einem indifferenten organischen Lösungsmittel, in Wasser oder in Mischung davon erfolgen, wobei gegebenenfalls säurebindende Mittel, wie Magnesiumoxid, Natriumcarbonat, Natriumhydrogencarbonat, Calciumcarbonat oder Natriumacetat, zugesetzt werden können. Geeignete organische Lösungsmittel sind beispielsweise Kohlenwasserstoffe, Chlorkohlenwasserstoffe, Nitrokohlenwasserstoffe, Nitrile, Amide, Carbonsäuren, Carbonsäureanhydride, Ketone und Dialkylsulfoxide, wie Benzol, Toluol, Tetrachlorethan, Mono- und Dichlorbenzol, Nitrobenzol, Acetonitril, Propionitril, Dimethylformamid, N-Methylpyrrolidon, Essigsaure, Propionsäure, Milchsäure, Acetanhydrid, Aceton, Butanon und Dimethylsulfoxid.

Die entstehenden Farbstoffe der Formel (I) fallen entweder aus dem Lösungsmittel direkt aus und können z.B. durch Abfiltrieren isoliert werden oder man kann sie bei der Verwendung von mit Wasser mischbaren Lösungsmitteln als feste, abfiltrierbare Produkte erhalten durch Verdünnen mit Wasser und Zugabe wasserlöslicher Salze wie Natrium- oder Kaliumchlorid, gegebenenfalls in Gegenwart von Zinkchlorid oder Eisenchlorid.

Die erfindungsgemäßen Farbstoffe der Formel (I) eignen sich hervorragend zum Färben und Bedrucken von kationisch färbbaren Fasern, vorzugsweise von Polymerisaten und Mischpolymerisaten des Acrylnitril und Dicyanoethylens, sowie von sauer modifizierten Fasern aus Polyamid und Polyester, wobei echte Farbtöne erhalten werden. Die Farbstoffe können auch Verwendung finden zum Färben und Bedrucken von tannierten Zellulosematerialien, Papier, Seide und Leder. Sie sind weiter geeignet zur Herstellung von Schreibflüssigkeiten, Stempelflüssigkeiten und Kugelschreiberpasten und Inkjet-Tinten. Sie lassen sich auch im Gummidruck verwenden.

Das Färben von beispielsweise Polymerisaten und Mischpolymerisaten des Acrylnitrils kann z.B. aus schwach saurer Flotte erfolgen, wobei man in das Färbebad vorzugsweise bei 40 bis 60°C eingeht und dann bei Kochtemperatur färbt. Man kann auch unter Druck bei Temperaturen über 100°C färben. Desweiteren lassen sich mit den erfindungsgemäßen Farbstoffen Spinnlösungen zum Färben polyacrylnitrilhaltiger Fasern herstellen.

Die Färbungen der erfindungsgemäßen Farbstoffe der Formel (I) auf Materialien aus Polyacrylnitril zeichnen sich durch sehr gute Licht-, Naß- und Reibechtheiten und durch eine hohe Affinität zur Faser aus.

Erfindungsgemäße Farbstoffe können einzeln, in Mischungen untereinander oder in Mischungen mit anderen Farbstoffen angewendet werden.

Die vorliegende Erfindung betrifft schließlich auch kationisch gefärbte Fasern, tannierte Zellulosematerialien, Papier, Seide, Leder, Kugelschreiberpasten, Schreibflüssigkeiten, Stempelflüssigkeiten und Inkjet-Tinten, die dadurch gekennzeichnet sind, daß sie mindestens einen kationischen 1,3,4-Thiadiazolfarbstoff der Formel (I) enthalten.

Die nachfolgenden Beispiele 1 bis 30 betreffen Farbstoffe der Formel (Ia).

### Beispiel 1

12,4 g des 2-Amino-1,3,4-thiadiazols der Formel 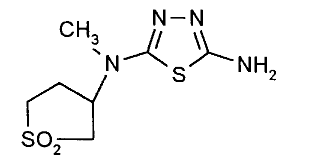
wurden in einer Mischung aus 80 ml Eisessig, 30 ml 85 %iger Phosphorsäure und 10 ml 48 %iger Schwefelsäure gelöst. Bei 5°C tropften 10 ml 5-molare Natriumnitrit-Lösung dazu. Nach 30 min wurde diese Diazoniumsalzlösung bei 5°C zu einer Lösung von 6,1 g Dimethylanilin in 100 ml Eisessig getropft. Nach 1 h bei 5°C und 2 h wurde auf 1000 ml Wasser ausgetragen, abgesaugt, mit Wasser gründlich gewaschen und getrocknet. Man erhielt 14,5 g (76 % der Theorie) gelboranges Pulver des Farbstoffs der Formel 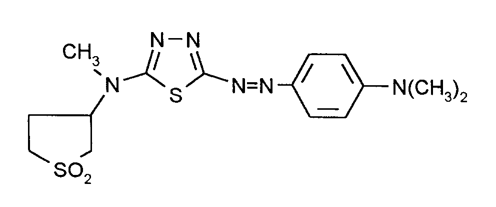
5,7 g dieses Azofarbstoffs wurden in 60 ml Eisessig gelöst. 1,2 g Natriumacetat und 2,8 ml Dimethylsulfat wurden bei 35°C zugesetzt. Nach 20 h bei dieser Temperatur wurden 1,0 g Natriumacetat und 1,4 ml Dimethylsulfat und nach weiteren 40 h bei 35°C die gleichen Mengen erneut zugegeben. Nach weiteren 20 h wurde mit 150 ml Wasser verdünnt und mit 200 ml gesättigter Kochsalzlösung versetzt. Der Niederschlag wurde abgesaugt, mit 10 %iger Kochsalzlösung gewaschen und getrocknet. Man erhielt 5,2 g (68 % der Theorie) blaues Pulver der Formel (Ia) mit K = ein Rest der Formel (IIa), R¹ = R² = R⁴ = R⁵ = Methyl, R^{3a} = R^{3b} = Wasserstoff und X⁻ = Cl⁻.

In Methanol/Eisessig 9:1 besaß dieser Farbstoff ein Absorptionsmaximum bei 599 nm. Er färbte Polyacrylnitrilgewebe in einem klaren, farbstarken und lichtechten Blau.

Analog zu Beispiel 1 wurden die Farbstoffe der nachfolgenden Tabelle hergestellt.

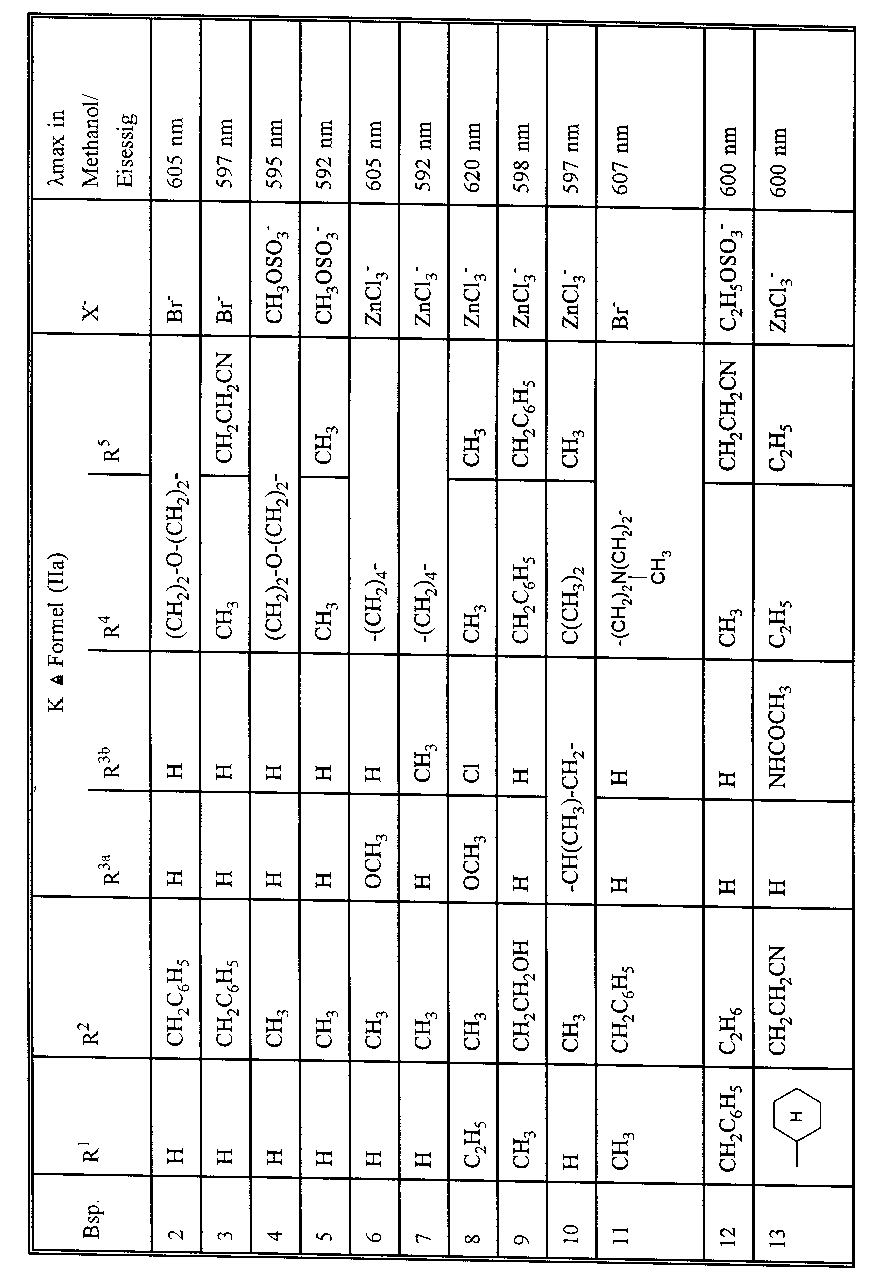

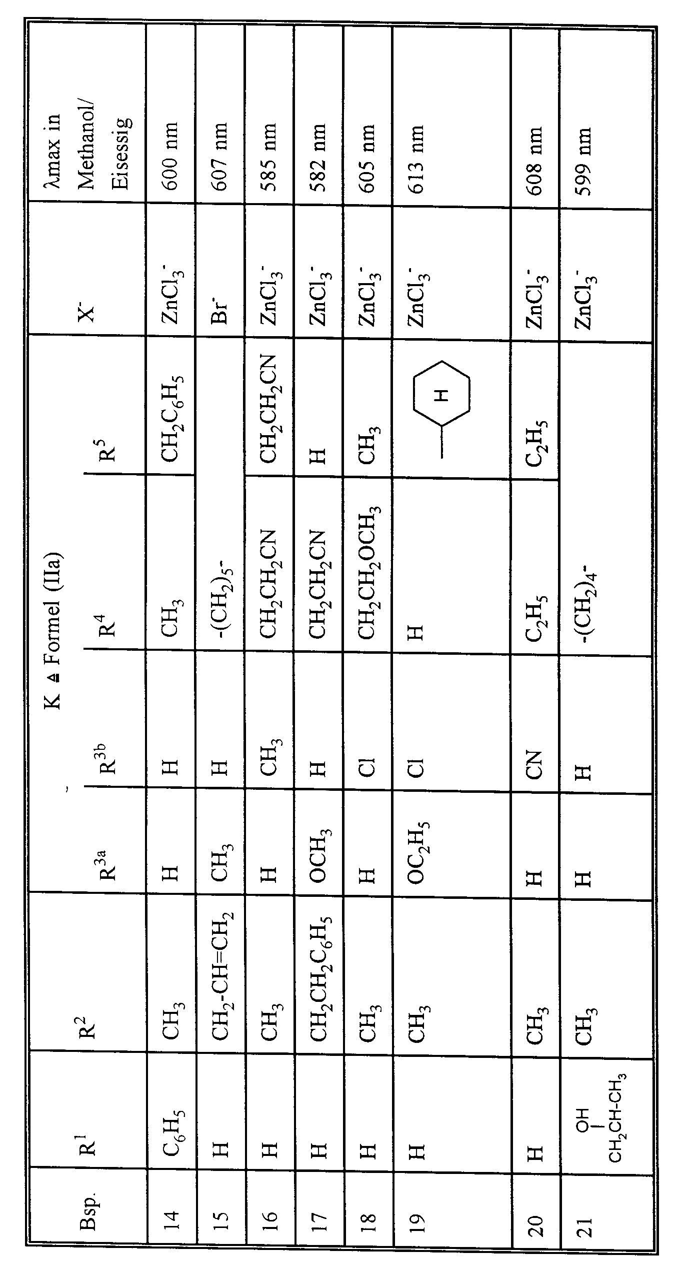

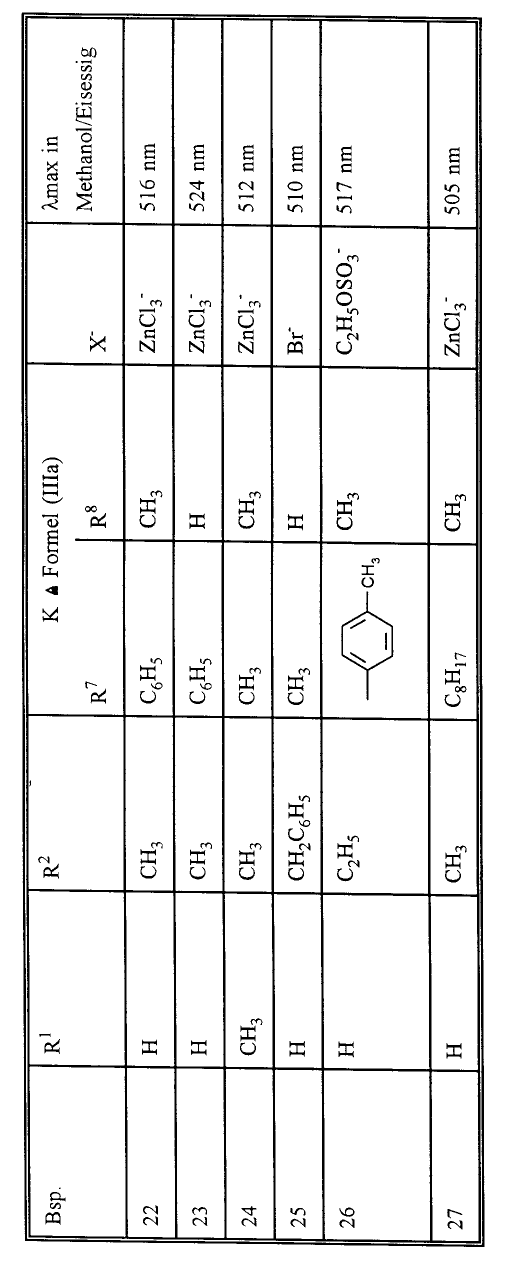

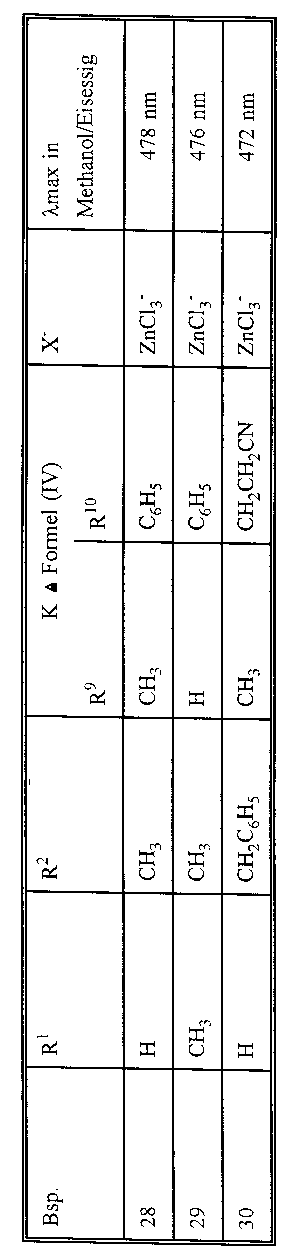

Die nachfolgenden Beispiele 31 bis 69 repräsentieren Farbstoffe der Formel (Ib):

### Beispiel 31

11,1 g des 2-Amino-1,3,4-thiadiazols der Formel 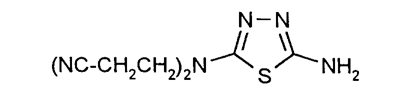
und 8,1 g des Anilins der Formel 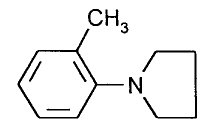
wurden in 150 ml Eisessig gelöst. Bei Raumtemperatur tropften 10 ml 5-molare Natriumnitrit-Lösung dazu. Nach 4 h bei Raumtemperatur wurde abgesaugt, mit 10 gew.-%iger Essigsäure gründlich gewaschen und getrocknet. Man erhielt 10,2 g (52 % der Theorie) geib-oranges Pulver des Farbstoffs der Formel 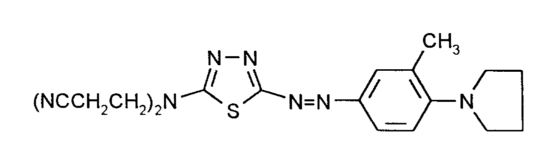
5,1 g dieses Azofarbstoffs wurden in 100 ml Eisessig bei 35°C gelöst. 2,5 ml Dimethylsulfat und anschließend 1,1 g Natriumacetat wurden bei 35°C zugesetzt. Über Nacht wurde bei 35°C gerührt, mit 150 ml Wasser verdünnt, flitriert, mit 300 ml Wasser verdünnt und mit 100 ml 2-molarer Zinkchloridlösung gefällt. Vom schmierigen Niederschlag wurde dekantiert. Er wurde in 600 ml Wasser gelöst und mit 150 ml gesättigter Kochsalzlösung gefällt. Nach Rühren über Nacht wurde abgesaugt, mit 10 %iger Kochsalzlösung gewaschen und getrocknet. Man erhielt 5,4 g (62 % der Theorie) blaues Pulver der Formel (Ib) mit R = R¹ = Cyanethyl, R² = Methyl, K = ein Rest der Formel (IIa), worin R^{3a} = Methyl, R^{3b} = Wasserstoff, NR⁶R⁷ = Pyrrolidino und X⁻ = ZnCl₃⁻.

In Methanol/Eisessig 9:1 besaß dieser Farbstoff ein Absorptionsmaximum bei 610 nm. Er färbte Polyacrylnitrilgewebe in einem klaren, farbstarken und lichtechten, leicht grünstichigen Blau.

Analog zu Beispiel 31 wurden die Farbstoffe der nachfolgenden Tabelle erhalten.

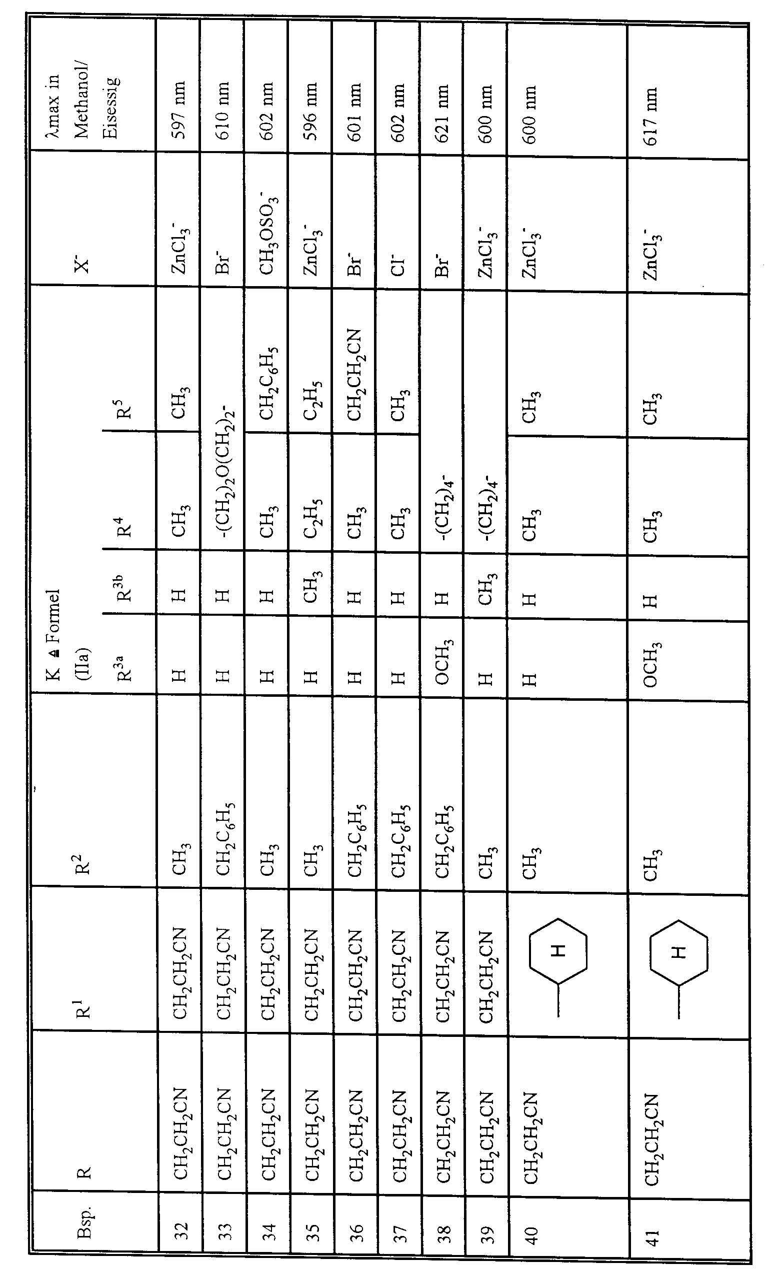

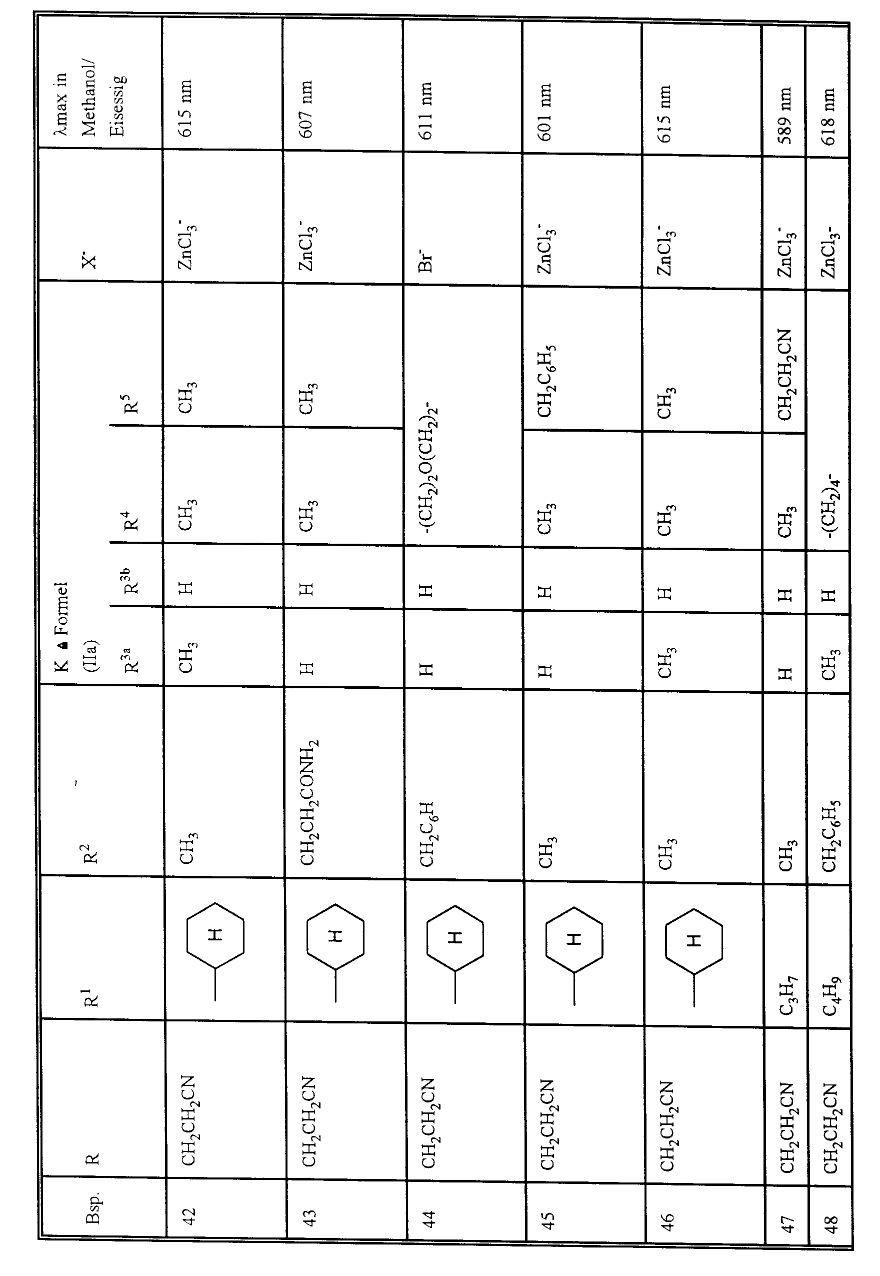

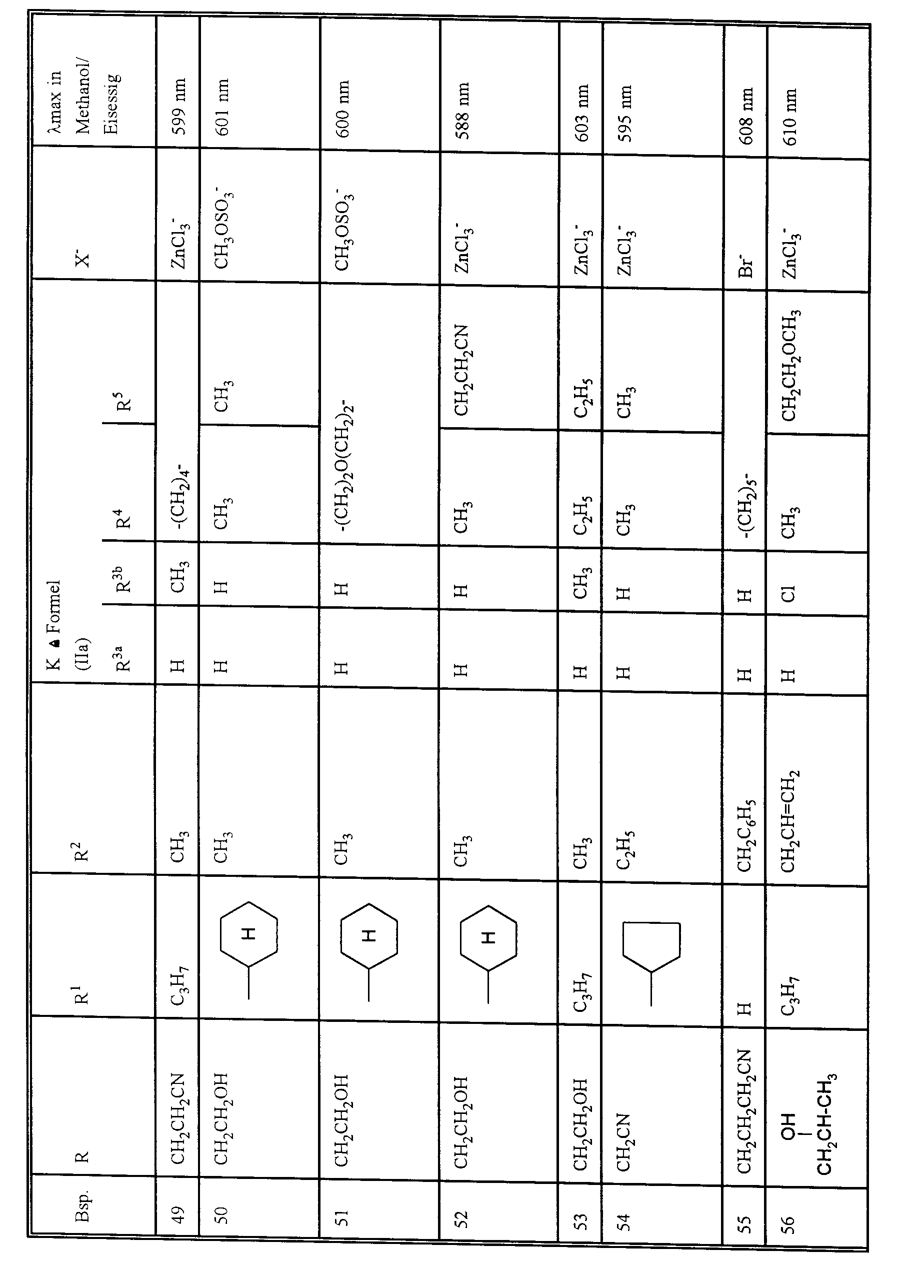

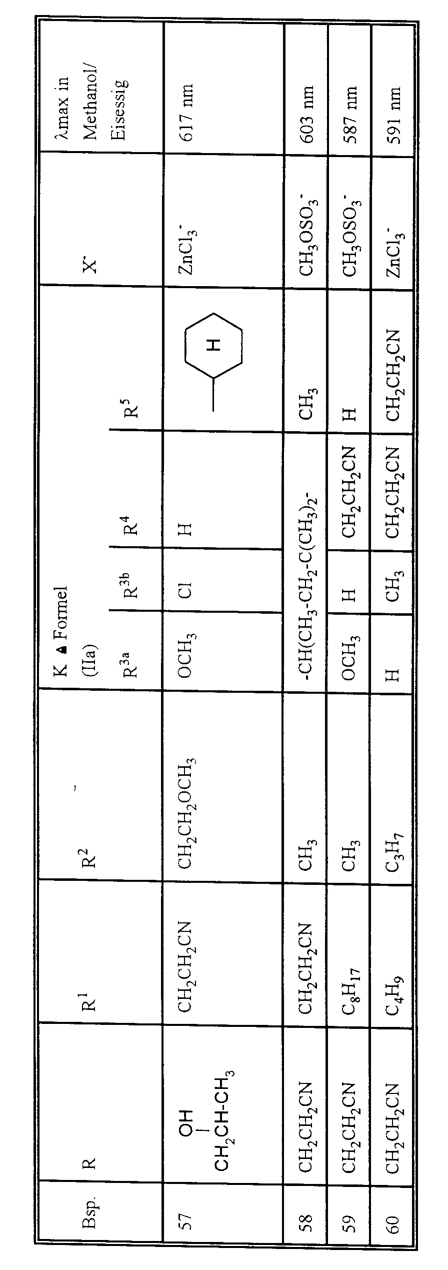

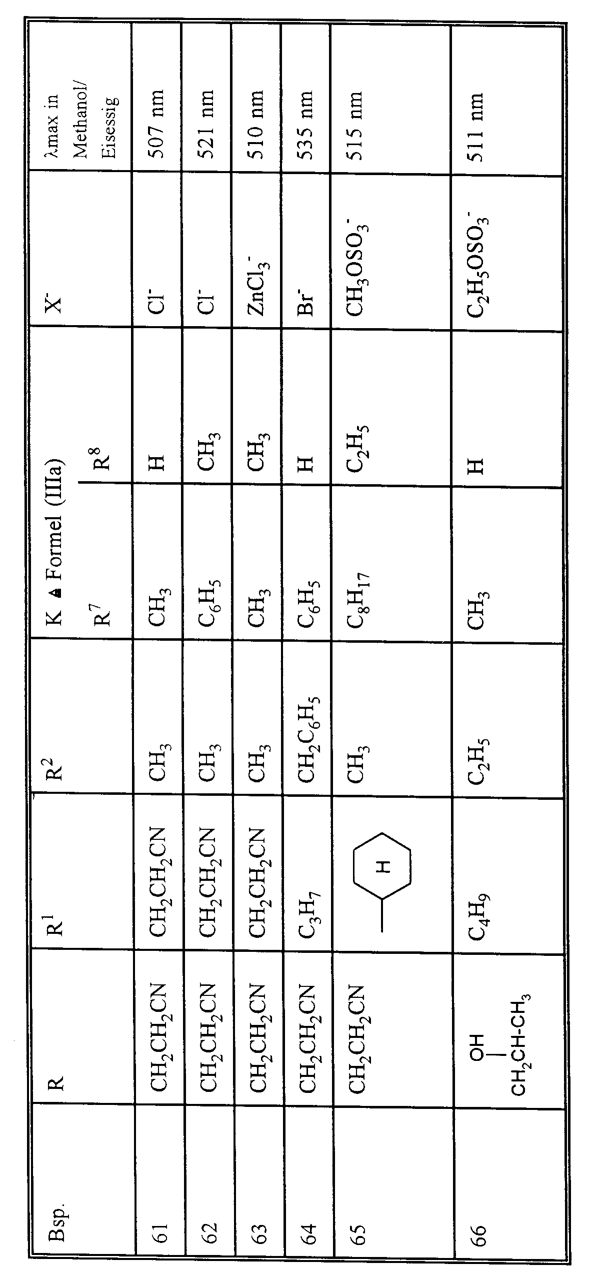

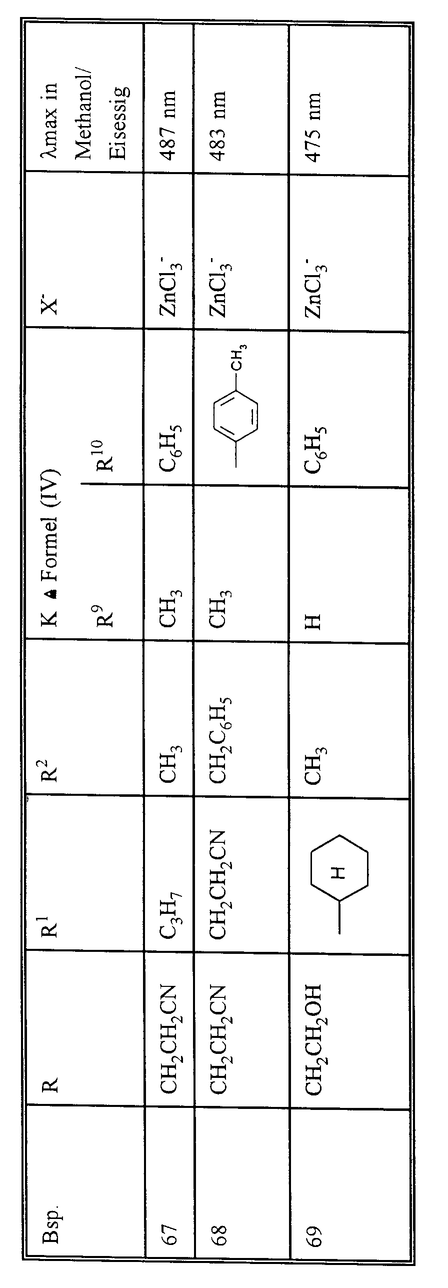

## Patentansprüche

1. Kationische 1,3,4-Thiadiazolfarbstoffe der Formel (I) 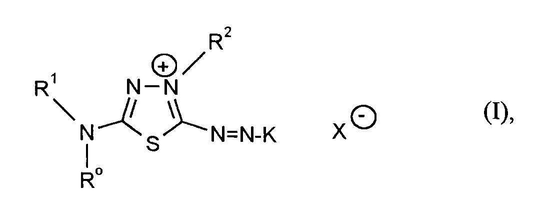 worin
R² C₁-C₁₂-Alkyl, C₂-C₁₂-Alkenyl, C₄-C₈-Cycloalkyl oder C₆-C₁₀-Aryl-C₁-C₅-alkyl bedeutet und
a)
R¹ für Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl steht, wenn
R^{o} einen Rest der Formel 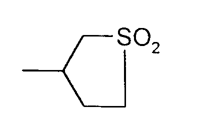 bedeutet,
oder
b)
R¹ für C₂-C₁₂-Alkenyl, C₄-C₈-Hydroxyalkyl, C₁-C₈-Cyanoalkyl, C₄-C₈-Cycloalkyl, C₆-C₁₀-Aryl, unsubstituiertes C₃-C₁₂-Alkyl oder durch Halogen, C₁-C₄-Alkoxy, C₁-C₄-Alkoxycarbonyl oder Phenyl substituiertes C₁-C₁₂-Alkyl steht, wenn
R^{o} einen durch Cyano oder Hydroxy substituierten C₁-C₁₂-Alkylrest bedeutet,
oder
R¹ für Wasserstoff, CH₃ oder C₂H₅ steht, wenn R^{o} CH₂CN oder CH₂CH₂CH₂CN bedeutet,
K einen Rest einer Kupplungskomponente der Formel (II), (III) oder (IV) 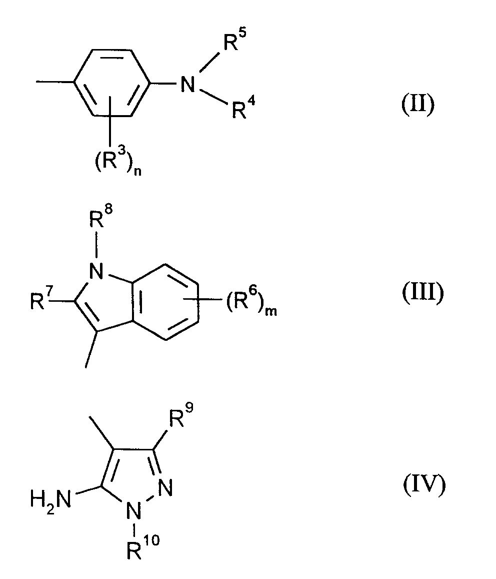
bedeutet, worin
R³ Wasserstoff, Halogen, Cyano, Nitro, Hydroxy, C₁-C₁₂-Alkyl, C₁-C₁₂-Alkoxy, C₁-C₁₂-Alkoxycarbonyl, C₁-C₁₂-Acylamino, C₁-C₁₂-Acyloxy, C₁-C₁₂-Alkoxycarbonylamino oder C₁-C₁₂-Alkoxycarbonyloxy bedeutet,
R⁴ und R⁵ unabhängig voneinander jeweils Wasserstoff, C₁-C₁₂-Alkyl, C₂-C₁₂-Alkenyl, C₄-C₈-Cycloalkyl, C₆-C₁₀-Aryl-C₁-C₅-alkyl, oder einen gegebenenfalls über eine Methylen- oder Ethylengruppe gebundenen Heterocyclus mit bis zu 2 Ringen und bis zu 3 Heteroatomen aus der Gruppe O, N und S oder
R⁴ und R⁵ gemeinsam mit dem Stickstoffatom, an das sie gebunden sind, einen Heterocyclus mit bis zu 2 Ringen und bis zu 4 Heteroatomen aus der Gruppe O, N und S bilden, oder
R³ und R⁴ und/oder R³ und R⁵ gemeinsam eine 2- oder 3-C-Atome enthaltende Brücke bilden, die gegebenenfalls ein Sauerstoff-, Stickstoff- oder Schwefelatom enthalten und gegebenenfalls mit 1 bis 3 Methyl-oder Ethylgruppen substituiert sind,
R⁶ Wasserstoff, C₁-C₁₂-Alkyl, C₁-C₁₂-Alkoxy, Cyan, Halogen oder Nitro,
R⁷, R⁸, R⁹ und R¹⁰ unabhängig voneinander Wasserstoff, C₁-C₁₂-Alkyl, C₂-C₁₂-Alkenyl, C₄-C₈-Cycloalkyl, C₆-C₁₀-Aryl oder C₆-C₁₀-Aryl-C₁-C₅-Alkyl,
R⁹ zusätzlich Cyano oder C₁-C₁₂-Alkoxycarbonyl,
n und m unabhängig 1 oder 2 bedeuten und
X^{⊖} ein Anion bedeutet.

2. Kationische Thiadiazolfarbstoffe der Formel (I) nach Anspruch 1, die der Formel (Ia) entsprechen 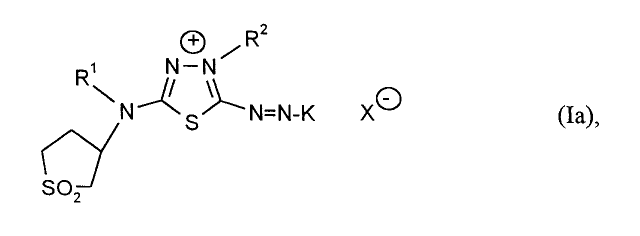 worin
K den Rest einer Kupplungskomponente der Formeln (IIa), (IIIa) oder (IV) darstellt, 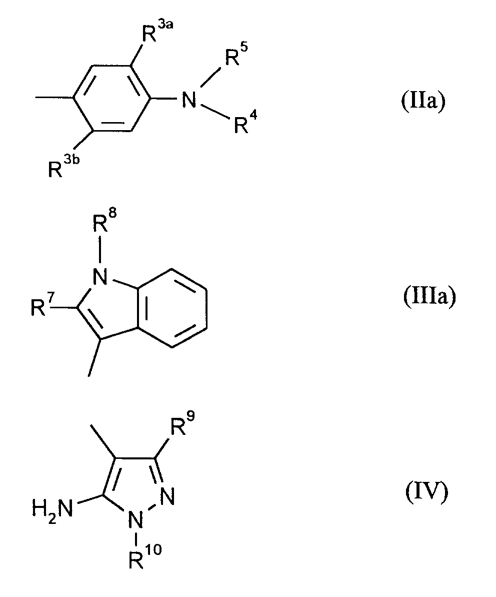 worin
R¹ Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl,
R² C₁-C₁₂-Alkyl, C₂-C₁₂-Alkenyl, C₄-C₈-Cycloalkyl oder C₆-C₁₀-Aryl-C₁-C₅-alkyl,
R^{3a} Wasserstoff, Halogen, C₁-C₁₂-Alkyl oder C₁-C₁₂-Alkoxy,
R^{3b} Wasserstoff, Halogen, C₁-C₁₂-Alkyl, C₁-C₁₂-Alkoxy, Cyano, Hydroxy, C₁-C₁₂-Acylamino, C₁-C₁₂-Acyloxy, C₁-C₁₂-Alkoxycarbonyl, C₁-C₁₂-Alkoxycarbonylamino oder C₁-C₁₂-Alkoxycarbonyloxy bedeutet,
R⁴ und R⁵ unabhängig voneinander Wasserstoff C₁-C₁₂-Alkyl, C₂-C₁₂-Alkenyl, C₄-C₈-Cycloalkyl oder C₆-C₁₀-Aryl-C₁-C₅-alkyl bedeuten oder
NR⁴R⁵ Pyrrolidino, Piperidino, Morphiolino oder Piperazino bedeutet oder
R^{3a} mit R⁴ eine -(CH₂)₂-, -(CH₂)₃- oder -O-(CH₂)₂-Brücke bilden, die unsubstituiert oder durch bis zu 3 Alkylreste substituiert ist,
R⁷, R⁸, R⁹ und R¹⁰ unabhängig voneinander Wasserstoff, C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl bedeuten und
R⁹ zusätzlich Cyano oder C₁-C₁₂-Alkoxycarbonyl bedeutet und
X⁻ ein Anion bedeutet.

3. Kationische 1,3,4-Thiadiazolfarbstoffe der Formel (Ia) gemäß Anspruch 2, worin
R¹ Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist, C₅-C₇-Cycloalkyl oder unsubstituiertes oder durch bis zu drei Reste aus der Reihe Halogen, C₁-C₄-Alkyl, C₁-C₄-Alkoxy, Cyano oder Nitro substituiertes Phenyl bedeutet,
R² unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist, oder C₅-C₇-Cycloalkyl bedeutet,
R^{3a} Wasserstoff, Halogen, C₁-C₄-Alkyl oder C₁-C₄-Alkoxy bedeutet,
R^{3b} Wasserstoff, Halogen, C₁-C₄-Alkyl, C₁-C₄-Alkoxy, Cyano, Hydroxy, unsubstituiertes oder durch Halogen substituiertes C₁-C₄-Alkanoylamino, -Alkanoyloxy oder -Alkylsulfonylamino oder C₁-C₄-Alkoxy-carbonyl-, -carbonylamino- oder -carbonyloxy-Reste bedeutet,
R⁴ und R⁵ unabhängig voneinander unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist oder C₅-C₇-Cycloalkyl bedeutet und
R⁵ zusätzlich Wasserstoff bedeuten kann oder
R^{3a} mit R⁴ eine Brücke der Formeln -(CH₂)₂-, -(CH₂)₃-, -CH₂-CH(CH₃)-, -CH(CH₃)-CH₂-C(CH₃)₂- oder -O-(CH₂)₂- bedeuten oder
NR⁴R⁵ Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
R⁷ und R⁹ unabhängig voneinander Wassrestoff, unsubstituiertes oder durch Halogen, Methoxy oder Cyano substituiertes C₁-C₈-Alkyl, das unverzweigt oder verzweigt ist oder unsubstituiertes oder durch Halogen, Methyl, Methoxy oder Cyano substituiertes Phenyl bedeuten und
R⁹ zusätzlich Cyano oder C₁-C₄-Alkoxycarbonyl bedeutet,
R⁸ und R¹⁰ unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl, das jeweils unverzweigt oder verzweigt ist oder C₅-C₇-Cycloalkyl oder unsubstituiertes oder durch bis zu drei Reste aus der Reihe Halogen, C₁-C₄-Alkyl, C₁-C₄-Alkoxy, Cyano oder Nitro substituiertes Phenyl bedeuten und
X⁻ ein Anion bedeutet.

4. Kationische 1,3,4-Thiadiazolfarbstoffe der Formel (I) nach Anspruch 1, die

5. der Formel (Ib) entsprechen 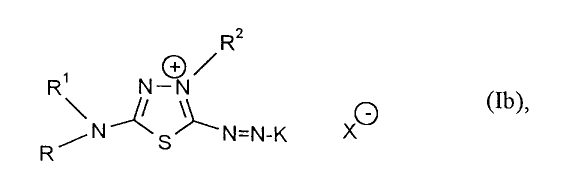 worin
K den Rest einer Kupplungskomponente der Formeln (IIa), (IIIa) und (IV) darstellt 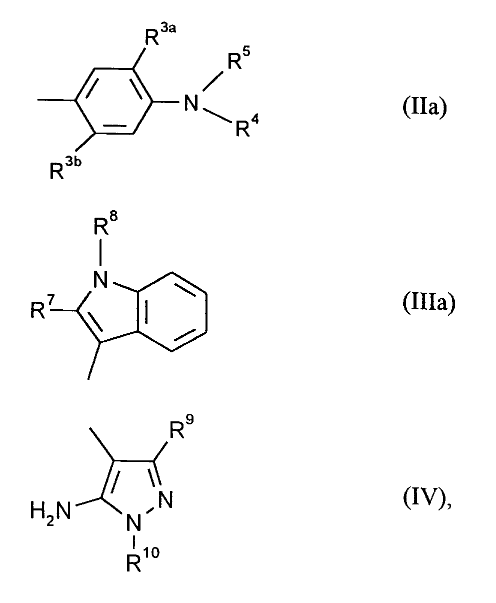
worin
R einen durch Cyano oder Hydroxy substituierten C₁-C₁₂-Alkylrest bedeutet,
R¹ C₂-C₁₂-Alkenyl, C₄-C₈-Hydroxyalkyl, C₁-C₈-Cyanoalkyl, C₄-C₅-Cycloalkyl, C₆-C₁₀-Aryl, unsubstituiertes C₃-C₁₂-Alkyl oder durch Halogen, C₁-C₄-Alkoxy, C₁-C₄-Alkoxycarbonyl oder Phenyl substituiertes C₁-C₁₂-Alkyl bedeutet,
oder
R¹ für Wasserstoff, CH₃ oder C₂H₅ steht, wenn R CH₂CN oder CH₂CH₂CH₂CN bedeutet,
R² C₁-C₁₂-Alkyl, C₂-C₁₂-Alkenyl, C₄-C₈-Cycloalkyl oder C₆-C₁₀-Aryl-C₁-C₅-alkyl bedeutet,
R^{3a} Wasserstoff, Halogen, C₁-C₁₂-Alkyl oder C₁-C₁₂-Alkoxy bedeutet,
R^{3b} Wasserstoff, Halogen, C₁-C₁₂-Alkyl, C₁-C₁₂-Alkoxy, Cyano, Hydroxy, C₁-C₁₂-Acylamino, C₁-C₁₂-Acyloxy, C₁-C₁₂-Alkoxycarbonyl, C₁-C₁₂-Alkoxycarbonylamino oder C₁-C₁₂-Alkoxycarbonyloxy bedeutet,
R⁴ und R⁵ unabhängig voneinander Wasserstoff, C₁-C₁₂-Alkyl, C₂-C₁₂-Alkenyl, C₄-C₈-Cycloalkyl oder C₆-C₁₀-Aryl-C₁-C₅-alkyl bedeuten oder
R^{3a} mit R⁴ eine -(CH₂)₂-, -(CH₂)₃- oder -O-(CH₂)₂-Brücke bilden, die unsubstituiert oder durch bis zu 3 Alkylreste substituiert ist, oder NR⁴R⁵ Pyrrolidino, Piperidino, Morpholino oder Piperazino bedeutet,
R⁷, R⁸, R⁹ und R¹⁰ unabhängig voneinander Wasserstoff C₁-C₁₂-Alkyl, C₂-C₁₂-Alkenyl, C₄-C₈-Cycloalkyl, C₆-C₁₀-Aryl-C₁-C₅-alkyl oder C₆-C₁₀-Aryl bedeuten und
R⁹ zusätzlich Cyano oder C₁-C₄-Alkoxycarbonyl bedeutet und
X⁻ ein Anion bedeutet.

6. Kationische 1,3,4-Thiadiazolfarbstoffe der Formel (Ib) gemäß Anspruch 4, worin
R Cyanmethyl, Cyanethyl, Cyanpropyl, Hydroxyethyl oder 2-Hydroxypropyl bedeutet,
R¹ unsubstituiertes C₃-C₈-Alkyl oder durch Halogen, C₁-C₄-Alkoxy, Hydroxy, C₁-C₄-Alkoxycarbonyl oder Phenyl substituiertes, C₁-C₈-Alkyl, das unverzweigt oder verzweigt ist, C₄-C₈-Hydroxyalkyl, Cyanethyl, Cyclopentyl oder Cyclohexyl bedeutet,
oder
R¹ für Wasserstoff, CH₃ oder C₂H₅ steht, wenn R CH₂CN oder CH₂CH₂CH₂CN bedeutet,
R² unsubstituiertes oder durch Halogen, C₁-C₄-Alkoxy, Hydroxy, Cyano, C₁-C₄-Alkoxycarbonyl oder Phenyl substituiertes, C₁-C₈-Alkyl, C₃-C₆-Alkenyl, das jeweils unverzweigt oder verzweigt ist oder C₅-C₇-Cycloalkyl bedeutet,
R^{3a} Wasserstoff, Halogen, C₁-C₄-Alkyl oder C₁-C₄-Alkoxy bedeutet,
R^{3b} Wasserstoff, Halogen, C₁-C₄-Alkyl, C₁-C₄-Alkoxy, Cyano, Hydroxy, unsubstituierte oder durch Halogen substituierte C₁-C₄-Alkanoylamino-, -Alkanoyloxy- oder -Alkylsulfonylamino-Reste oder C₁-C₄-Alkoxycarbonyl-, -Carbonylamino- oder -Carbonyloxy-Reste bedeutet,
R⁴ und R⁵ unabhängig voneinander unsubstituiertes oder durch Halogen, C₁-C₄-Alkoxy, Hydroxy, Cyano, C₁-C₄-Alkoxycarbonyl oder Phenyl substituiertes, C₁-C₈-Alkyl, C₃-C₆-Alkenyl, das jeweils unverzweigt oder verzweigt ist oder C₅-C₇-Cycloalkyl, bedeutet und
R⁵ zusätzlich Wasserstoff bedeutet oder
R^{3a} mit R⁴ eine Brücke der Formeln -(CH₂)₂-, -(CH₂)₃-, -CH₂-CH(CH₃)-, -CH(CH₃)-CH₂-C(CH₃)₂- oder -O-(CH₂)₂- bildet
NR⁴R⁵ Pyrrolidino, Piperidino, Morpholino, Piperazino oder N-C₁-C₄-Alkylpiperazino, wobei der Alkylrest unsubstituiert oder durch Halogen, Hydroxy oder Cyano substituiert ist, bedeutet,
R⁷ und R⁹ unabhängig voneinander Wasserstoff, unsubstituiertes oder durch Halogen, Methoxy oder Cyano substituiertes, unverzweigtes oder verzweigtes C₁-C₈-Alkyl oder unsubstituiertes oder durch Halogen, Methyl, Methoxy oder Cyano substituiertes Phenyl bedeuten und
R⁹ zusätzlich Cyano oder C₁-C₄-Alkoxycarbonyl bedeutet,
R⁸ und R¹⁰ unabhängig voneinander Wasserstoff, unsubstituiertes oder durch Halogen, C₁-C₄-Alkoxy, Hydroxy, Cyano, C₁-C₄-Alkoxycarbonyl oder Phenyl substituiertes C₁-C₈-Alkyl, C₃-C₆-Alkenyl oder C₅-C₇-Cycloalkyl bedeutet, oder unsubstituiertes oder durch bis zu drei Resten aus der Reihe Halogen, C₁-C₄-Alkoxy, Cyano oder Nitro substituiertes Phenyl bedeuten und
X⁻ ein Anion bedeutet.

7. Verfahren zur Herstellung von kationischen 1,3,4-Thiadiazolfarbstoffen der Formel (I) gemäß Anspruch 1, das dadurch gekennzeichnet ist, daß man 2-Amino-1,3,4-thiadiazole der Formel (V) 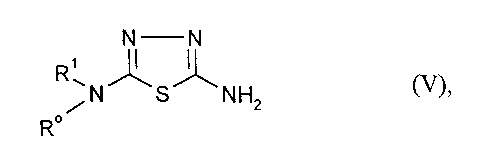 in der R¹ und R^{o} die in Anspruch 1 angegebene Bedeutung haben, diazotiert und auf eine Kupplungskomponente der Formel K-H kuppelt und dann mit Verbindungen der Formel (VI)
(R²)X (VI),
in der
R² und X die gemäß Anspruch 1 angegebene Bedeutung haben,
quaterniert.

8. Verfahren nach Anspruch 6, dadurch gekennzeichnet, daß es sich bei der Kupplungskomponente K um eine Verbindung der Formeln (VII), (VIII) oder (IX) handelt 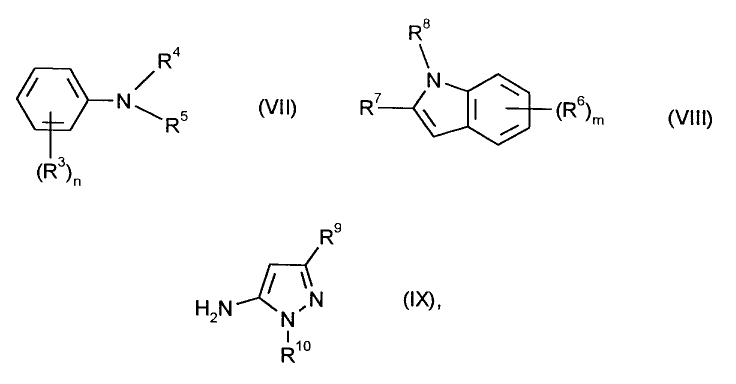 in denen
R³, R⁴, R⁵, R⁶, R⁷, R⁸, R⁹, R¹⁰, m und n die in Anspruch 1 angegebenen Bedeutungen haben.

9. Verwendung von Farbstoffen des Anspruchs 1 zum Färben und Bedrucken von Polymerisaten und Mischpolymerisaten des Acrylnitril und Dicyanoethylens, sowie von sauer modifizienen Fasern aus Polyamid und Polyester und zum Färben und Bedrucken von tannierten Zellulosematerialien, Papier, Seide und Leder und zur Herstellung von Schreibflüssigkeiten, Stempelflüssigkeiten, Kugelschreiberpasten und Inkjet-Tinten und im Gummidruck.

10. Polymerisate und Mischpolymerisate des Acrylnitrils und Dicyanoethylens, sauer modifizierte Fasern aus Polyamid, tannierte Zellulosematerialien, Papier, Seide, Leder, Kugelschreiberpasten, Schreibflüssigkeiten und Stempelflüssigkeiten und inkjet-Tinten, die dadurch gekennzeichnet sind, daß sie mindestens einen kationischen 1,3,4-Thiadiazdfärbstoff der Formel (I) gemäß Anspruch 1 enthalten.
